# DEMANDE DE BREVET EUROPEEN

(11) **EP 1 736 942 A1**
(43) Date de publication de la demande: **27.12.2006**
(21) Numéro de dépôt: 06290903.1
(22) Date de dépôt: 02.06.2006
(51) Int. Cl.: G07F 17/42

(54) **Procédé de sécurisation d'une transaction et ticket pour la mise en oeuvre de ce procédé**

(30) Priorité: 09.06.2005 FR 0505856
(71) Demandeur: Sagem Défense Sécurité, 75015 Paris (FR)
(72) Inventeur: Chaussade, Xavier, 75015 Paris (FR); Herbaut, Vincent, 75015 Paris (FR); Lallemant, Jean-François, 75015 Paris (FR)
(74) Mandataire: Lavialle, Bruno François Stéphane

(57) **Abrégé**

La présente invention concerne un procédé de sécurisation d'une transaction, comprenant une étape d'activation de la transaction et une étape ultérieure de vérification de la transaction caractérisé en ce qu'il met en oeuvre un ticket (11) en papier ayant une face sensible (12) qui comporte un signe d'identification (13) du ticket, en une couleur déterminée et qui est agencée pour être imprimable thermiquement en une couleur différente de celle du signe d'identification, et en ce que l'étape d'activation comprend les phases de :
- lire le signe d'identification sur le ticket,
- élaborer une référence (14) de la transaction et mettre en correspondance la référence et le signe d'identification,
- imprimer la référence thermiquement sur le ticket ;
et l'étape de vérification comprend:
- l'opération de vérifier que le ticket est en papier thermique,
- une phase de lecture du signe d'identification et de la référence sur le ticket.

## Description

La présente invention concerne un procédé de sécurisation d'une transaction et un ticket pour la mise en oeuvre de ce procédé. Le procédé est par exemple utilisable pour une transaction de type prise de paris, remise de valeurs à un tiers et retrait...

### ARRIERE PLAN DE L'INVENTION

Les procédés de prise de paris actuels utilisent un serveur de centralisation des paris qui contient, pour chaque pari, un numéro d'enregistrement et les conditions du pari et qui est relié à des terminaux dispersés notamment chez des commerçants tels que des buralistes. Les terminaux permettent aux commerçants d'enregistrer sur le serveur de centralisation les paris de leurs clients parieurs.

Les terminaux permettent d'éditer un ticket qui est remis au parieur à titre de reçu et qui contient le numéro d'enregistrement du pari sur le serveur de centralisation et les conditions du pari. Si le parieur gagne son pari, il doit remettre son ticket au commerçant afin que celui-ci vérifie auprès du serveur de centralisation que le numéro d'enregistrement correspond effectivement à un pari gagnant. Le cas échéant, le serveur de centralisation transmet au commerçant le montant à payer au parieur. Dans ce type de transaction, les paris sont anonymes et les gains sont versés au porteur du ticket gagnant. Il existe donc le risque qu'un fraudeur reproduise un ticket gagnant soit par photocopie soit par reproduction du ticket gagnant sur un ordinateur pour encaisser le montant du gain avant le véritable gagnant. Pour limiter ce risque, il est connu de réaliser sur les tickets des codes barres imprimés par des encres spéciales rendant la fraude plus difficile. Ce procédé de sécurisation est toutefois coûteux et rend la fabrication des tickets délicate à maîtriser.

### OBJET DE L'INVENTION

Un but de l'invention est de proposer un moyen de sécurisation d'une transaction, qui soit sûr et peu onéreux.

### BREVE DESCRIPTION DE L'INVENTION

A cet effet, on prévoit, selon l'invention, un procédé de sécurisation d'une transaction, comprenant une étape d'activation de la transaction et une étape ultérieure de vérification de la transaction, le procédé mettant en oeuvre un ticket en papier ayant une face sensible qui comporte un signe d'identification du ticket, en une couleur déterminée, et qui est agencée pour être imprimable thermiquement en une couleur différente de celle du signe d'identification. L'étape d'activation comprend les phases de :
- lire le signe d'identification sur le ticket,
- élaborer une référence de la transaction et mettre en correspondance la référence et le signe d'identification,
- imprimer la référence thermiquement sur le ticket ;
   et l'étape de vérification comprend :
- l'opération de vérifier que le ticket est en papier thermique,
- une phase de lecture de la référence et du signe d'identification sur le ticket.

Ainsi, le ticket comporte un signe d'identification qui lui est propre et la référence inscrite sur le ticket est mise en correspondance avec ce signe d'identification. Pour contrefaire le ticket, un fraudeur doit utiliser du papier imprimable thermiquement (puisque la nature du papier est contrôlée) et doit imprimer, en des couleurs différentes, le signe d'identification et la référence sur la face sensible du papier thermique. Le fraudeur peut utiliser du papier imprimable thermiquement en deux couleurs, mais ce papier est coûteux et n'est pas facilement disponible pour le grand public. Le fraudeur peut également réaliser sur du papier thermique monochrome une impression par un moyen non thermique de la référence ou du signe d'identification. Une telle impression n'est pas possible au moyen d'une imprimante laser, la chaleur dégagée provoquant une impression thermique sur le ticket, ni par jet d'encre, les encres les plus courantes n'accrochant pas sur la face sensible du papier thermique. Le risque de fraude est donc limité.

De préférence, l'opération de vérification du papier comprend une phase d'identification d'une zone vierge sur le ticket, une phase d'impression d'un code dans la zone vierge et une phase de lecture du code sur le ticket.

L'opération de vérification de la nature du papier est alors relativement simple et rapide.

L'invention a également pour objet un ticket pour la mise en oeuvre du procédé ci-dessus. Ce ticket est en papier ayant une face sensible qui porte un signe d'identification du ticket, en une couleur déterminée, et qui est agencée pour être imprimable thermiquement en une couleur différente de celle du signe d'identification.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :
- la figure 1 est une vue en perspective d'un ticket conforme à l'invention,
- la figure 2 est un schéma illustrant l'activation de la transaction dans le procédé conforme à l'invention,
- la figure 3 est un schéma illustrant la vérification de la transaction.

### DESCRIPTION DETAILLEE DE L'INVENTION

Le procédé de sécurisation conforme à l'invention est ici décrit en application à une transaction de type pari.

Pour illustrer le procédé de l'invention, le pari est ici réalisé dans le cadre d'un jeu de hasard, plus précisément une loterie, consistant pour le parieur à deviner les numéros qui seront tirés au sort par l'organisateur de la loterie.

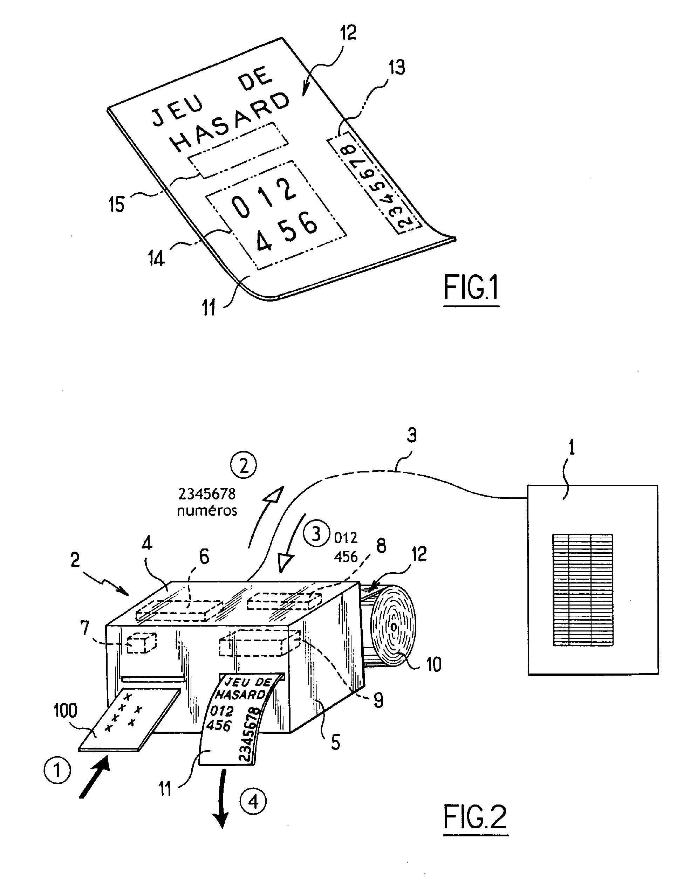

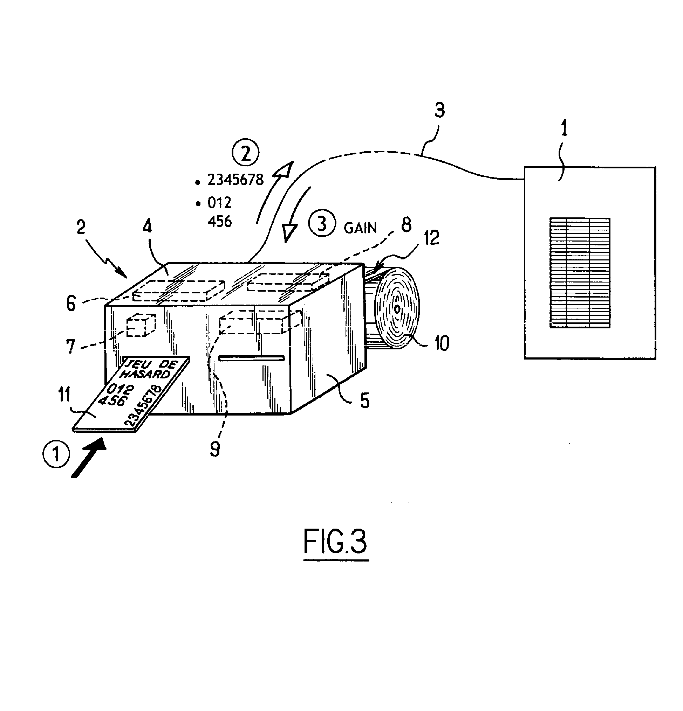

Ce procédé est mis en oeuvre au moyen d'une installation telle qu'illustrée aux figures 2 et 3.

L'installation comprend un serveur 1 de centralisation des paris et des terminaux généralement désignés en 2 dont un seul est représenté sur les figures.

Le serveur 1 comprend une unité informatique associée à un support d'enregistrement, tel qu'un disque magnétique, destiné à contenir des données relatives aux paris. Un tel serveur est connu en lui-même et est par exemple hébergé dans les locaux de l'organisateur de la loterie.

Le serveur 1 est relié aux terminaux 2, dispersés chez des commerçants, par un réseau 3 tel que le réseau Internet.

Un terminal 2 comprend une partie 4 essentiellement dédiée à la lecture et une partie 5 essentiellement dédiée à l'impression (les composants internes des parties 4, 5, qui seront mentionnés ci-après, sont schématisés par des blocs en pointillés sur les figures 2, 3, les technologies utilisées étant connues en elles-mêmes). Le terminal 2 comprend également un écran non représenté.

La partie 4 comprend ici un scanner 6 agencé pour pouvoir détecter le noir et le rouge et une tête d'impression thermique 7 dont la fonction sera décrite par la suite. La partie 4 comprend également des moyens d'amenée d'un ticket en face du scanner 6 et la tête d'impression 7.

La partie 5 comprend une imprimante thermique 8, une tête de numérisation 9 dont la fonction sera décrite par la suite et des moyens d'amenée et de découpe non représentés. Les moyens d'amenée sont agencés pour guider une bande de papier 10 depuis un logement de stockage en rouleau dans la partie 5 jusque devant la tête de numérisation 9 et l'imprimante 8 puis jusqu'au moyen de découpe agencé pour découper la bande 10 après impression pour former un ticket 11.

La bande de papier 10 possède de façon connue en soi une face 12 sensible à l'impression thermique. La face sensible 12 porte un signe d'identification 13 de chaque ticket 11 qui sera découpé dans la bande de papier 10. Le signe d'identification 9 est ici un numéro (2, 3, 4, 5, 6, 7, 8 aux figures) préimprimé sur la bande de papier 10 selon des intervalles réguliers ayant une longueur correspondant à la longueur du ticket 11. Le signe d'identification 13 est imprimé dans une couleur différente de celle de l'impression thermique, ici par exemple en rouge, alors que l'impression thermique est en noir. L'impression du signe d'identification 13 est par exemple réalisée en Offset.

Le fonctionnement de l'installation conformément au procédé de l'invention va maintenant être décrit.

La prise du pari est effectuée au moyen d'un bon 10 sur lequel le parieur doit cocher les numéros qu'il a sélectionnés préalablement au tirage au sort (voir la figure 2). Le bon 100 est introduit dans la partie 4 afin que le scanner 6 puisse lire lesdits numéros. Simultanément, la tête de numérisation 8 de la partie 5 lit le signe d'identification 13 figurant sur la zone de la bande de papier 10 qui va être imprimée va constituer le ticket 11 correspondant au pari. Le signe d'identification 13 et les numéros joués sont alors transmis au serveur 1 où ils sont mémorisés en association avec une référence 14 du pari. Cette référence 14 est en l'occurrence un numéro d'enregistrement du pari dans le serveur 1 (ici les séries de chiffres O, 1, 2 et 4, 5, 6). La référence 14 est alors transmise au terminal 2 afin d'être imprimée par l'imprimante 8 de la partie 5 sur la zone de la bande 10 correspondant au ticket 11 qui sera remis au parieur. La référence 14 est alors imprimée thermiquement sur la face sensible 12 du ticket 11 en une couleur (ici noir) différente de celle du signe d'identification 13.

D'autres informations pourraient également être imprimées sur le ticket 11, comme les numéros joués, la mise...

Une fois le tirage au sort réalisé, le parieur sait s'il a gagné ou pas. S'il a gagné, il doit présenter son ticket 11 à un commerçant équipé d'un terminal 2. Le commerçant introduit le ticket 11 dans la partie 4 dont le scanner 6 identifie une zone vierge 15 sur le ticket 11 et la tête d'impression 7 imprime thermiquement un code dans la zone vierge 15. Ce code peut être un motif, des chiffres... Le ticket est ensuite ramené devant le scanner 6 pour que celui-ci détecte le code. Si le code correct est détecté, il est vérifié que le ticket 11 est en papier thermique et le procédé se poursuit. Si le code n'est pas correct ou le scanner 6 ne parvient pas à le détecter, le ticket 11 n'est pas en papier thermique et est rejeté comme faux.

Si le code correct est détecté, le scanner 6 lit le signe d'identification 13 et la référence 14. Ces informations sont transmises au serveur 1 qui vérifie la correspondance du signe d'identification 13 et de la référence 14 et renvoie, le cas échéant, au terminal une information confirmant le gain. Le commerçant paye alors au parieur le montant du gain.

Bien entendu, l'invention n'est pas limitée au mode de réalisation décrit et on peut y apporter des variantes de réalisation sans sortir du cadre de l'invention tel que défini par les revendications.

En particulier, les moyens de mise en oeuvre du procédé conforme à l'invention et notamment les terminaux peuvent avoir une structure différente de ceux décrits. Ainsi, dans le cas d'une loterie à petite échelle, le procédé peut être mis en oeuvre au moyen d'un simple ordinateur pourvu de moyens de numérisation et d'impression thermique.

Le signe d'identification peut être constitué par un code alphanumérique, une combinaison de motifs géométriques, ou autre.... Le signe d'identification peut en outre être imprimé avec une encre visible seulement sous un rayonnement infrarouge ou plus généralement sous un rayonnement ayant un spectre hors du domaine visible. Les moyens de numérisation sont alors bien évidemment adaptés à la lecture du signe d'identification.

La vérification de la nature du papier peut être réalisée différemment que dans le mode de réalisation décrit : l'étape de détection de la zone vierge peut être omise si l'impression du code est réalisée dans une zone prédéfinie ne comportant jamais d'inscription.

## Revendications

1. Procédé de sécurisation d'une transaction, comprenant une étape d'activation de la transaction et une étape ultérieure de vérification de la transaction **caractérisé en ce qu'**il met en oeuvre un ticket (11) en papier ayant une face sensible (12) qui comporte un signe d'identification (13) du ticket, en une couleur déterminée, et qui est agencée pour être imprimable thermiquement en une couleur différente de celle du signe d'identification, et **en ce que** l'étape d'activation comprend les phases de :
- lire le signe d'identification sur le ticket,
- élaborer une référence (14) de la transaction et mettre en correspondance la référence et le signe d'identification,
- imprimer la référence thermiquement sur le ticket ;
et l'étape de vérification comprend:
- l'opération de vérifier que le ticket est en papier thermique,
- une phase de lecture du signe d'identification et de la référence sur le ticket.

2. Procédé selon la revendication 1, **caractérisé en ce que** l'opération de vérification du papier comprend une phase d'identification d'une zone vierge (15) sur le ticket (11), une phase d'impression d'un code dans la zone vierge et une phase de lecture du code sur le ticket.

3. Ticket en papier ayant une face sensible (12) qui porte un signe d'identification (13) du ticket, en une couleur déterminée, et qui est agencée pour être imprimable thermiquement en une couleur différente de celle du signe d'identification.
